# EUROPEAN PATENT APPLICATION

(11) **EP 0 783 956 A1**
(43) Date of publication of application: **16.07.1997**
(21) Application number: 96100254.0
(22) Date of filing: 10.01.1996
(51) Int. Cl.: B29C 65/18

(54) **Machine for the continuous heat sealing of plastic and/or paper-like ribbons in one or more mutual combinations**

(71) Applicant: BURGOPACK STAMPA, TRASFORMAZIONE, IMBALLAGGI S.p.A., I-36030 Lugo Di Vicenza, Vicenza (IT)
(72) Inventor: Visona, Sergio, I-36010 Chiuppano (Vicenza) (IT)
(74) Representative: Modiano, Guido, Dr.-Ing.

(57) **Abstract**

The present invention relates to a machine for the continuous heat-sealing of plastic and/or paper-like ribbons in one or more mutual combinations. The machine is characterized in that it comprises two series of disks (29,30) that are mounted and fixed on respective parallel and contrarotating shafts; each one of the two series is constituted by at least two disks, and at least a first one of the two series of disks is associated with heating means and is in contact with the corresponding peripheral regions, made of soft material (36), related to the disks of a second one of the two series. Two or more ribbons (15,16), fed by feeder means, pass between the first and the second series of disks, with consequent mutual heat-sealing so as to produce tubular elements.

## Description

The present invention relates to a machine for the continuous heat sealing of plastic and/or paper-like ribbons in one or more mutual combinations.

The manufacture of tubular elements, constituted by two or more plastic ribbons, by superimposing and continuous heat sealing has long been known.

Conventional technologies allow continuous heat sealing exclusively between compatible materials, compatibility meaning the ease with which they can be mutually heat-sealed.

In the packaging of medical instruments and in other fields where it is necessary to sterilize products, tubular elements are used comprising a plastic ribbon that is heat-sealed to a paper-like ribbon which is externally printed with advertising signs and with regions bearing an ink that is sensitive to the agents employed in the sterilization processes and color changes.

It is noted that the main sterilization methods make use of steam, gamma rays, and oxyacetylene as sterilizing agents.

Paper and plastics are materials that are poorly compatible in terms of heat sealing in the sense mentioned above.

The machines produced so far to heat-seal these two materials are constituted, in their basic components, by pairs of bars, the bars of each pair being arranged respectively above and below the ribbons to be welded along a portion wherein said ribbons are kept substantially straight and superimposed.

By stepwise actuation, the ribbons are made to advance, while the pairs of bars, which are movable so as to open and close, perform heat sealing in portions that correspond to the length of said bars.

In particular, the actual heat-sealing action occurs by mutual closure of the elements that constitute the pairs of bars, which clamp the two ribbons and produce coupling by heating, which is produced in said bars usually by electric resistors.

Machines operating in this manner, however, entail various drawbacks.

First of all, since the treatment is limited by the length of the bars, not only it is discontinuous, but it also has a very low productivity level with respect to the production of these tubular elements, which are typically a mass product.

Furthermore, by opening and closing, not only the bars do have different thermal conditions from one another, but an individual bar too, depending on its location and on the movement it performs, has heat cycles with variable temperatures.

Accordingly, temperature constancy, which is a prerequisite of good heat sealing, is never ensured in the bar pairs.

Furthermore, in order to avoid portions that are not heat-sealed, it is necessary to provide overlapping portions between one heat-sealing step and the next; these overlapping portions differ from the remaining part of the sealing ridge both mechanically and aesthetically.

The principal aim of the present invention is to provide a heat-sealing machine that performs this process continuously.

Accordingly, an object of the present invention is to provide a heat-sealing machine that produces a uniform heat-sealing action as far as mechanical and aesthetic features are concerned.

Another object of the present invention is to provide a heat-sealing machine the heat-sealing quality whereof, in terms of mechanical strength, is at least equal to the quality provided by conventional heat-sealing machines.

Another object of the present invention is to provide a heat-sealing machine that achieves a productivity level, in terms of quantity, that is distinctly higher than conventional machines.

Another object of the present invention is to provide a heat-sealing machine having competitive costs with respect to conventional machines.

Another object of the present invention is to provide a reliable heat-sealing machine requiring limited maintenance.

This aim, these objects, and others which will become apparent hereinafter are achieved by a machine for the continuous heat-sealing of plastic and/or paper-like ribbons in one or more mutual combinations, characterized in that it comprises two series of disks that are mounted and fixed on respective parallel and contrarotating shafts, each one of said two series comprising at least two disks, at least a first one of said two series of disks being associated with heating means and being in contact with the corresponding peripheral regions, made of soft material, related to the disks of a second one of said two series, two or more ribbons, fed by feeder means, passing between said first and said second series of disks, with consequent mutual heat-sealing so as to produce tubular elements.

Further characteristics and advantages of the present invention will become apparent from the detailed description of an embodiment thereof, illustrated only by way of non-limitative example in the accompanying drawings, wherein:
figure 1 is a general schematic view of a machine according to the invention;
figure 2 is an axonometric view of a detail of the machine according to the invention;
figure 3 is a sectional view of another detail of a machine according to the invention;
figure 4 is another axonometric view of the detail of figure 2 of a machine according to the invention;
figure 5 is an axonometric view of a tubular element produced by a machine according to the invention;
figure 6 is an axonometric view of another detail of a machine according to the invention.

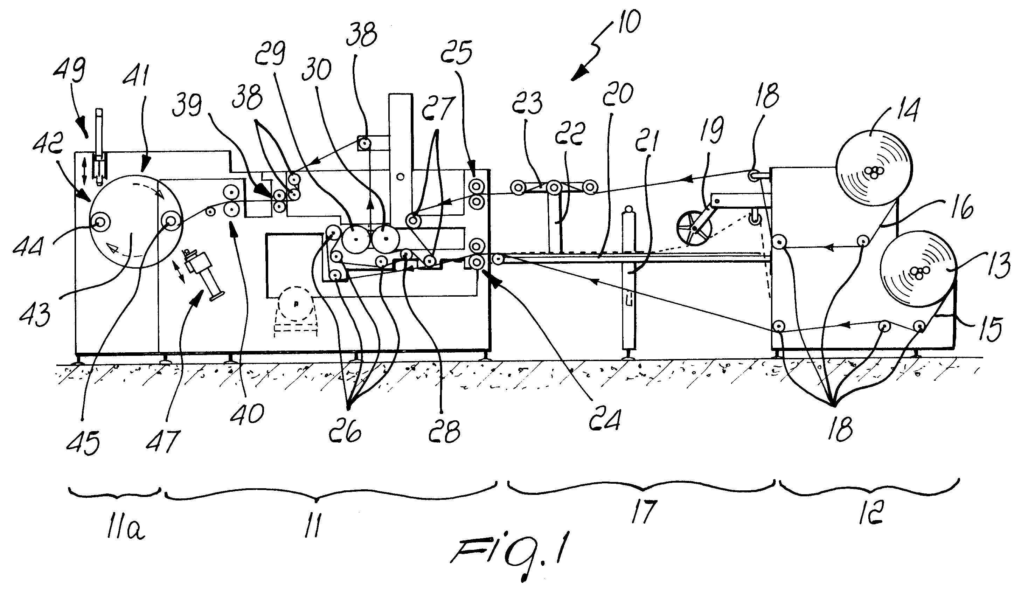

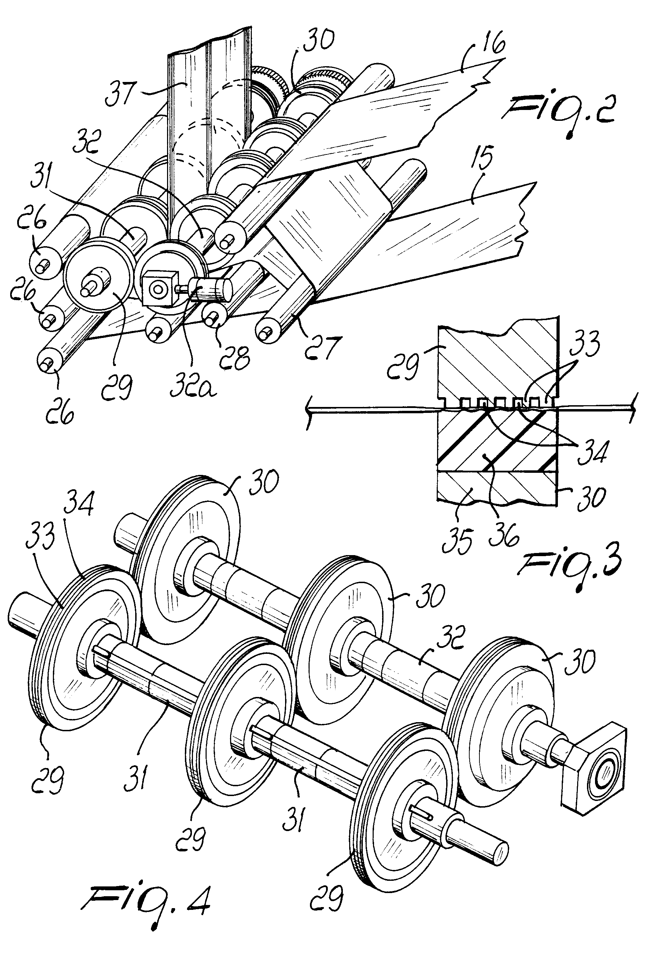

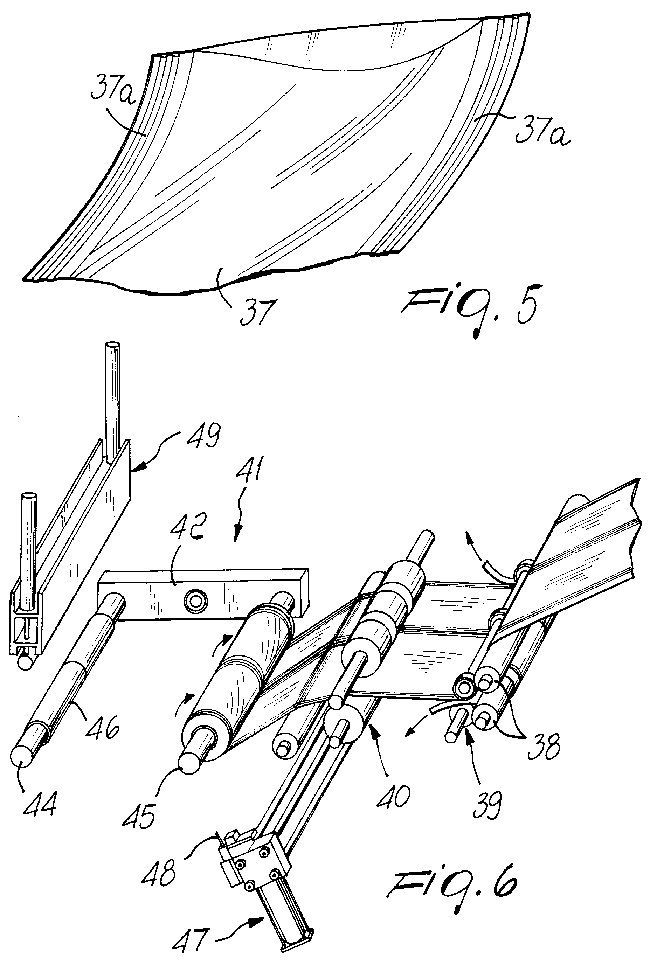

With reference to figures 1 to 6, a machine for continuous heat-sealing, in this case, of plastic and paper-like ribbons, according to the invention, is generally designated by the reference numeral 10.

Substantially four sections can be identified in this case in the machine 10, i.e.: a heat-sealing section 11, wherein the actual heat-sealing process occurs; a feeder section 12 that supports, in this case, two reels 13 and 14 wherefrom a plastic ribbon 15 and a paper-like ribbon 16 are unwound respectively; a connecting section 17, which connects the heat-sealing section 11 to the feeder section 12 and furthermore supports guiding devices specified hereinafter; and a takeup section 11a that is structurally included, in this case, in the heat-sealing section 11 but is functionally distinct therefrom.

The feeder section 12 rotatably supports fixed guides 18; some of said guides are meant for the ribbon 16 and some are meant for the ribbon 15.

An oscillating guide 19 for compensating tension is furthermore provided and is also supported by the feeder section 12; the ribbon 15 can be optionally passed through said guide.

The connecting section 17, which is substantially constituted by a supporting surface 20 resting on the ground by means of a leg 21, supports a substantially T-shaped guiding device 22, with a cross-member 23 that oscillates to compensate the tensions of the ribbon 16.

The ribbon 15 and the ribbon 16 are both received in the heat-sealing section 11 by respective pairs of rollers 24 and 25.

Each one of said pairs of rollers 24 and 25 constitutes a traction element for the ribbon 15 and the ribbon 16 respectively.

A series of fixed guides is rotatably supported by the heat-sealing section 11; said guides are designated by the reference numeral 26 if they concern the path of the ribbon 15 and by the reference numeral 27 if they concern the path of the ribbon 16.

A guiding roller 28 is rotatably rigidly coupled to the heat-sealing section 11; both the ribbon 15 and the ribbon 16 arrive together at said roller and are thus coupled therein.

The ribbon 16, at the roller 27, which is heated by an electric resistor, not shown, is preheated so as to reach a temperature of approximately 48^{o} Celsius.

The guiding roller 28 is arranged proximate to two series, in this case, of five disks each; the disks relating to a first one of said series are designated by the reference numeral 29 and the disks relating to a second one of said series are designated by the reference numeral 30.

In particular, the disks 29 are mounted and fixed, so as to be spaced from one another, on a shaft 31, whereas the disks 30 are in turn mounted and fixed, so as to be spaced from one another, on a shaft 32; moreover, the mutual distances between the disks 29 and between the disks 30 are adjustable.

The shafts 31 and 32 rotate in opposite directions and are spaced from one another so that the peripheral regions of the disks 29 are in contact with the peripheral regions of the corresponding disks 30; furthermore, they can be disassembled for maintenance, repair, or replacement due to a change in production.

Each one of the disks 29 is made of metallic material, thus offering a rigid contrast with respect to the corresponding disks 30; moreover, its peripheral region is shaped so as to form raised portions 33 and circumferential grooves 34.

A circumferential electric resistor, not shown in the figures, is furthermore provided inside each one of the disks 29; said resistor is located proximate to the peripheral region and keeps said region at a temperature that in this case can be approximately 160^{o} Celsius.

Electricity is supplied to the electric resistor by the shaft 31 and is supplied to said shaft by means of rotating electric contacts, for example of the mercury type, not shown in the figures, which are per se known.

Each one of the disks 30 is constituted by a metallic body 35, whereon a band 36, made of rubber or other soft material, is fixed circumferentially, thus forming the peripheral region; furthermore, the shaft 32 whereon the disks are mounted is movable towards or away from the shaft 31 by means of actuators 32a arranged at its ends.

The disks 30 therefore provide a soft contrast for the corresponding disks 29.

The disks 30, in a manner that is fully similar to the disks 29, are also kept at a stable temperature by means of an electric resistor, not shown in the figures; in particular, the temperature of the peripheral region of the disks 30 is preferably substantially 105^{o} Celsius in this case.

The tubular ribbon 37 is obtained at the output of the disks 29 and 30; after passing through guides 38 and pairs of rollers 39 and 40, said ribbon arrives at the takeup section 11a, which supports takeup means that are generally designated by the reference numeral 41.

In particular, the rollers 39 comprise circumferential cutters 39a for longitudinal cutting, the mutual distance whereof can be changed according to production requirements in order to make them correspond to the heat-sealing ridges 37a, including the edge ones, of the tubular element 37, whereas the rollers 40 provide a traction element for said tubular element 37.

It should be specified that the disks 29 and the disks 30, which are arranged internally, are in this case duplicated with respect to the disks 29 and 30 that are arranged at the ends of the respective shafts 31 and 32, since each one must ensure an adequate heat-sealing ridge for two tubular components related to the tubular element 37.

In the described case, the tubular element 37 can in fact be divided into a plurality of tubular components, by longitudinally cutting the rollers 39, which constitute the actual finished product.

In this regard, the rollers 39 furthermore cut the tubular element 37 with reference to the internal heat-sealing ridges 37a exactly at the centerline of each one of them, where a heat-sealed region is provided or not, depending on the shape of the disks 29 or 30.

The takeup means 41 substantially comprise a carousel device 42 constituted by a disk 43 that rotates about a substantially horizontal axis and wherefrom two opposite pivots 44 and 45 extend in peripheral regions.

The pivots 44 and 45 rotate with respect to the disk 43 by virtue of a kinematic system not shown in the figures, and in this case their direction of rotation matches that of said disk 43.

Cylindrical cores 46, usually made of cardboard and the surface whereof has been covered with double adhesive, are fitted on the pivots 44 and 45.

Therefore, when one of the two pivots 44 and 45 arrives proximate to the feed of the tubular ribbon 37, an actuator 47 pushes said tubular ribbon against the double adhesive of the cylindrical core 46 and simultaneously, by means of a blade 48, transversely cuts the tubular ribbon 37 that is already wound on the other one of the two pivots 44 and 45.

There is also an actuator 49 that provides a presser for the tubular ribbon 37.

The machine 10 furthermore comprises electric motors, not shown in the figures, for moving the shafts 31 and 32 and the takeup means 41, as well as a hydraulic circuit, also not shown in the figures, for moving the actuators 47 and 49.

In practice, operation is as follows: the ribbon 15, after being unwound from the corresponding reel 13, passes through the series of guides described above, arriving close to the disks 29 and 30; the ribbon 16 unwound from the corresponding reel 14 does the same and is furthermore subjected to preheating.

At the guiding roller 28, which in this case, as mentioned, is close to the disks 30, the ribbons 15 and 16 are superimposed and passed, to be preheated, in contact with the disks 30 over a certain arc of their circumference (in this case, the arc is substantially one quarter of a full circle).

Downstream of said circular arc, they are introduced in the region of contact between the disks 29 and the disks 30, where the heat-sealing process occurs due to the temperature of said disks.

At the output of the disks 29 and 30 a tubular ribbon 37 is obtained which, in turn, by passing through a series of guides described above, reaches the takeup means 41 and, more specifically, arrives at the pair of rollers 39, which cut it longitudinally and trim it.

The pair of rollers 40 then feeds the tubular ribbon 37 to the takeup section 11a.

The tubular ribbon 37 in fact reaches one of the two pivots 44 and 45, is cut transversely, and is pushed against the double-adhesive tape that covers the surface of a core 46 if one of the two pivots 44 or 45 passes exactly in the region meant for contact, or continues to wind on one of the two pivots 44 or 45, which moves away from said region.

As mentioned, an actuator 49 presses the paper when the reel is completed.

In practice it has been observed that the intended aim and objects have been achieved; in particular, it is noted that the provision of a machine that operates in a fully continuous and substantially automatic manner increases the production of tubular elements of the described type to productivity levels that are distinctly higher than in conventional machines.

Furthermore, said productivity levels, in a product that is typically meant to be mass-produced, allow considerable savings in terms both of labor and of production times.

Moreover, it is noted that the quality of the heat seal is considerably higher than current ones, since the rollers that perform it maintain a substantially constant heating condition because they never separate from one another.

It is also noted that the particular heat-sealing mechanism according to the invention eliminates the need for overlapping portions, with the consequent elimination of possible production rejects and of differences in the mechanical and aesthetic features of the heat seal.

Finally, it should be noted that the machine can also perform the mutual heat-sealing of ribbons in the following combinations: plastics-plastics, paper-lacquer paper, and others.

The present invention is susceptible of numerous modifications and variations, all of which are within the scope of the inventive concept.

All the details may furthermore be replaced with other technically equivalent elements.

In practice, the materials employed, as well as the dimensions, may be any according to the requirements.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. Machine for the continuous heat-sealing of plastic and/or paper-like ribbons in one or more combinations, characterized in that it comprises two series of disks that are mounted and fixed on respective parallel and contrarotating shafts, each one of said two series being constituted by at least two disks, at least a first one of said two series of disks being associated with heating means and being in contact with the corresponding peripheral regions, made of soft material, related to disks of a second one of said series, two or more ribbons, fed by feeder means, passing between said first and said second series of disks, with consequent mutual heat-sealing so as to produce tubular elements.

2. Machine according to claim 1, characterized in that both the disks related to said first series and the disks related to said second series are adjustable in terms of mutual distance.

3. Machine according to claim 1, characterized in that said shafts are detachable and can be disassembled for maintenance, repair, or replacement for changes in production.

4. Machine according to claim 1, characterized in that said peripheral regions related to said first series of disks are shaped so as to form circumferential raised portions and grooves.

5. Machine according to claims 1 and 4, characterized in that the disks related to said first series are made of metallic material, thus offering rigid contrast to the disks related to said second pair.

6. Machine according to one or more of the preceding claims, characterized in that the disks related to said second series have corresponding annular peripheral regions that are made of rubber or other soft flexible material.

7. Machine according to one or more of the preceding claims, characterized in that said second series of disks is mounted on a corresponding shaft that is movable, by means of actuators arranged at its ends, towards and away from the shaft whereon said first series of disks is mounted.

8. Machine according to one or more of the preceding claims, characterized in that the disks related to said second series are kept at a given temperature by heating means.

9. Machine according to one or more of the preceding claims, characterized in that said heating means are constituted by electric resistors.

10. Machine according to claim 9, characterized in that said electric resistors are arranged circumferentially proximate to the peripheral regions of the disks related both to said first and to said second series.

11. Machine according to claim 9, characterized in that said resistors provide a rotary connection to the electric power source by virtue of per-se-known mercury contacts.

12. Machine according to one or more of the preceding claims, characterized in that it comprises guiding means for said two or more ribbons.

13. Machine according to claim 12, characterized in that said guiding means move said one or more ribbons into mutual contact and into contact, before heat-sealing, with said second series of disks over a preset arc of the circumference of said disks.

14. Machine according to one or more of the preceding claims, characterized in that it comprises means for longitudinally cutting and trimming along the internal and edge heat-sealing ridges of said tubular elements.

15. Machine according to one or more of the preceding claims, characterized in that said longitudinal cutting and trimming means comprise one or more pairs of rollers provided with blades.

16. Machine according to one or more of the preceding claims, characterized in that it comprises takeup means for forming reels for the tubular element or elements obtained by heat-sealing said one or more ribbons.

17. Machine according to claim 16, characterized in that said takeup means comprise at least one carousel constituted by a rotating disk wherefrom two or more pivots extend in peripheral regions, said pivots rotating with respect to said disk, respective cylindrical cores for the takeup of said tubular element or elements being mounted on said pivots.

18. Machine according to one or more of the preceding claims, characterized in that it comprises means for the transverse cutting of said tubular element or elements.

19. Machine according to one or more of the preceding claims, characterized in that it comprises actuator means providing the contact for starting the takeup of said tubular element or elements on said cylindrical cores.
